# EUROPEAN PATENT APPLICATION

(11) **EP 4 667 357 A1**
(43) Date of publication of application: **24.12.2025**
(21) Application number: 24802828.4
(22) Date of filing: 29.04.2024
(51) Int. Cl.: B64C 27/28, B64C 27/26, B64C 27/52, B64C 29/00, B64C 19/00

(54) **VERTICAL TAKE-OFF AND LANDING AIRCRAFT AND CONTROL METHOD FOR VERTICAL TAKE-OFF AND LANDING AIRCRAFT**

(30) Priority: 08.05.2023 CN 202310504958; 07.12.2023 CN 202311670924
(71) Applicant: Sichuan Aerofugia Technology Development Co., Ltd., Chengdu, Sichuan 610095 (CN); Zhejiang Geely Holding Group Co., Ltd., Hangzhou, Zhejiang 310051 (CN)
(72) Inventor: GUO, Liang, Chengdu, Sichuan 610095 (CN); XU, Zhaohua, Chengdu, Sichuan 610095 (CN); XUE, Songbai, Chengdu, Sichuan 610095 (CN); TU, Qiang, Chengdu, Sichuan 610095 (CN); SHA, Yongxiang, Chengdu, Sichuan 610095 (CN); LUO, Junchang, Chengdu, Sichuan 610095 (CN); XIE, Shaiming, Chengdu, Sichuan 610095 (CN); LUO, Wenyu, Chengdu, Sichuan 610095 (CN); ZHU, Minghui, Chengdu, Sichuan 610095 (CN)
(74) Representative: Elzaburu S.L.P.
(86) International application number: PCT/CN2024/090500
(87) International publication number: WO 2024/230544

(57) **Abstract**

A vertical take-off and landing aircraft and a control method for a vertical take-off and landing aircraft. The vertical take-off and landing aircraft includes a fuselage (10), four tilting rotors and four fixed rotors. Wings (20) are symmetrically provided at both sides of the fuselage (10); four tilting rotors are respectively installed at the front and rear sides of the wings (20) on both sides, and are pairwise correspondence and symmetrical about the longitudinal symmetry plane (11) of the fuselage (10). A spacing of the tilting rotors at the front side of the wing (20) is A, a spacing of the tilting rotors at the rear side of the wing (20) is B, and a deviation between A and B is less than or equal to 0.2*(A+B)/2. Four fixed rotors are respectively provided at outer sides of the tilting rotors at both sides of the fuselage, and provided at the front sides and the rear sides of the wings (20), and are pairwise correspondence and symmetrical about the longitudinal symmetry plane (11). A spacing between two fixed rotors at the front sides of the wings (20) is C, a spacing between two fixed rotors on the rear sides of the wings (20) is D, and a deviation between C and D is less than or equal to 0.05*(C+D)/2.

## Description

### TECHNICAL FIELD

The present application relates to the technical field of aircraft, and specifically to a vertical take-off and landing aircraft and a control method for a vertical take-off and landing aircraft.

### BACKGROUND

Vertical take-off and landing fixed-wing aircraft (distributed propulsion type) have both the vertical take-off and landing capabilities of helicopters and the horizontal high-efficiency and high-speed flight capabilities of fixed wings. Compared with helicopters, they are quieter, more comfortable and economical. Compared with multi-rotors, they are more efficient and have a longer flying range. Compared with fixed wings, they can take off and land vertically on take-off and landing platforms in cities, making them an excellent choice for urban air travel. The mainstream configurations of vertical take-off and landing fixed-wing aircraft generally include three categories: Lift+Cruise configuration, all-tiltrotor configuration and partial-tiltrotor configuration. Various configurations have different advantages and disadvantages, and it is difficult to obtain a better balance. The weight of the propulsion system of the Lift+Cruise configuration is relatively high during horizontal flight, resulting in a relatively large proportion of the propulsion system weight; in addition, due to the lift propeller, the Lift+Cruise configuration has a large drag during horizontal flight. The combined effect of the two makes the maximum flight speed and flying range performance of the Lift+Cruise configuration relatively low. The all-tiltrotor configuration not only has a complex mechanical structure, but also has more complex aerodynamic characteristics and control method. Generally speaking, its safety is not as good as that of the Lift+Cruise configuration. The partial-tiltrotor configuration is expected to integrate the advantages of the two, but the partial-tiltrotor configuration that has been published cannot have the advantages of both at the same time. Therefore, it is necessary to propose a new vertical take-off and landing fixed-wing aircraft configuration to balance the advantages and disadvantages, so that the flight performance, safety, reliability, technical difficulty, etc. of the vertical take-off and landing fixed-wing aircraft can be better balanced.

### SUMMARY

In view of the above shortcomings of the prior art, the present application provides a vertical take-off and landing aircraft and a control method for a vertical take-off and landing aircraft to optimize the configuration of the vertical take-off and landing aircraft in the prior art.

In order to achieve the above purpose and other related purposes, the present application provides a vertical take-off and landing aircraft, including: a fuselage, four tilting rotors, and four fixed rotors. Both sides of the fuselage are provided with wings symmetrically. The four tilting rotors are respectively provided at front sides of the wings on both sides and rear sides of the wings on both sides; wherein positions of the four tilting rotors, rotation directions of the four tilting rotors and installation angles of the four tilting rotors are pairwise correspondence and symmetrical about a longitudinal symmetry plane of the fuselage; a spacing between two tilting rotors at the front sides of the wings is A, a spacing between the two tilting rotors at the rear sides of the wings is B, and a deviation between A and B is less than or equal to 0.2*(A+B)/2. The four fixed rotors are respectively provided at outer sides of the tilting rotors at both sides of the fuselage, and provided at the front sides and the rear sides of the wings; wherein positions of the four fixed rotors, rotation directions of the four fixed rotors and installation angles of the four fixed rotors are pairwise correspondence and symmetrical about the longitudinal symmetry plane; a spacing between two fixed rotors at the front sides of the wings is C, a spacing between two fixed rotors on the rear sides of the wings is D, and a deviation between C and D is less than or equal to 0.05*(C+D)/2. In vertical take-off and landing state, projections of the four tilting rotors on a horizontal plane are pairwise correspondence and centrally symmetrical about a center of gravity of the vertical take-off and landing aircraft within a first setting range, and positions are symmetrical about a vertical plane passing through the center of gravity and perpendicular to the longitudinal symmetry plane; a spacing of horizontal projections of the tilting rotors along a longitudinal direction is M; the first setting range is that a longitudinal deviation between an intersection of diagonal lines of the horizontal projections of the four tilting rotors and a horizontal projection of the center of gravity is less than or equal to 0.1*M; projection centers of the four fixed rotors on the horizontal plane are pairwise correspondence and centrally symmetrical about the center of gravity within a second setting range, and positions are symmetrical about the vertical plane; a longitudinal spacing of horizontal projections of the fixed rotors is N, and the second setting range is that a longitudinal deviation between an intersection of diagonal lines of the horizontal projections of the four fixed rotors and the horizontal projection of the center of gravity is less than or equal to 0.1*N.

In an example of a vertical take-off and landing aircraft of the present application, the tilting rotor at the front side of the wing and/or the tilting rotor at the rear side of the wing are provided at the wing by a wing boom.

In an example of a vertical take-off and landing aircraft of the present application, the tilting rotor at the front side of the wing and/or the tilting rotor at the rear side of the wing are provided at the fuselage by a supporting arm.

In an example of a vertical take-off and landing aircraft of the present application, the tilting rotor at the front side of the wing is provided at the wing by a wing boom, and the tilting rotor at the rear side of the wing is provided at the fuselage by a supporting arm.

In an example of a vertical take-off and landing aircraft of the present application, an empennage is provided at a tail of the fuselage, and the empennage is any one of a V-shaped empennage, a Y-shaped empennage, an H-shaped empennage, an X-shaped empennage, a T-shaped empennage, or a U-shaped empennage.

In an example of a vertical take-off and landing aircraft of the present application, the two tilting rotors are provided at the empennage and configured to provide forward thrust for the aircraft to fly forward, and are configured to tilt upward to provide vertical thrust in a vertical take-off and landing state.

In an example of a vertical take-off and landing aircraft of the present application, the empennage is a V-shaped tail assembly, and the two tilting rotors at the rear side of the wing are respectively provided at tips of the tail on both sides of an upper part of the empennage.

In an example of a vertical take-off and landing aircraft of the present application, the wings on both sides of the fuselage are provided with wing booms, and the four fixed rotors are symmetrically provided at the wing booms on both sides of the fuselage and are respectively provided at the front sides of the wings and the rear sides of the wings.

In an example of a vertical take-off and landing aircraft of the present application, the four tilting rotors include at least two tilting-nacelle rotors, and all of the tilting-nacelle rotors are symmetrically provided about a symmetry plane of the fuselage.

The present application further provides a control method for any of the vertical take-off and landing aircraft described above, including: the following transition process from vertical take-off to horizontal flight and/or transition process from the horizontal flight to vertical landing:
the transition process from the vertical take-off to the horizontal flight includes:
tilting, by a powered system, the four tilting rotors forward according to a forward flight command; and
configuring tilt rates of the four tilting rotors, and thrust distribution of the four tilting rotors and the four fixed rotors according to a climb command, thereby controlling rate of climb of the vertical take-off and landing aircraft and angle of climb of the vertical take-off and landing aircraft;
the transition process from horizontal flight to vertical landing includes:
   tilting, by the powered system, the four tilting rotors upward to a vertical take-off and landing position according to a speed command; and
   configuring the tilt rates of the four tilting rotors, and the thrust distribution of the four tilting rotors and the four fixed rotors according to a descent command, thereby controlling rate of descent of the vertical take-off and landing aircraft and angle of descent of the vertical take-off and landing aircraft.

In an example of the control method of the present application, the method further includes an unintentional spin or stall recovery process and/or a crosswind response process:

The unintentional spin or stall recovery process includes: starting the four fixed rotors to assist in attitude control, thereby recovering from the spin or stall condition.

The crosswind response process includes: when the wind speed exceeds a preset threshold, assisting yaw control by differential thrust of the four tilting rotors to counteract the crosswind.

The vertical take-off and landing aircraft of the present application adopts a unique two-sided symmetrical configuration form (a longitudinal symmetry plane, and a vertical plane passing through the center of gravity and perpendicular to the longitudinal symmetry plane), and defines the spacing position of the tilting rotor, the spacing position of the fixed rotor and the diagonal line connection position; in the vertical take-off and landing state, the projections of the four tilting rotors on the horizontal plane are all centrally symmetrical about the center of gravity of the vertical take-off and landing aircraft within a first setting range, and the fixed rotors are provided at the outer sides of the tilting rotors on both sides, and the projections of the four fixed rotors on the horizontal plane are all centrally symmetrical about the center of gravity of the vertical take-off and landing aircraft within a second setting range. This configuration can reduce the thrust that the remaining power units needs to output when a single rotor fails, thereby ensuring the safe flight of the aircraft. In addition, the present application adopts a special configuration, which not only take into account the advantages of the Lift+Cruise configuration, the all-tiltrotor configuration and the partial-tiltrotor configuration, but also can be more stable by this configuration, while also reducing the design and installation difficulty of the vertical take-off and landing aircraft, which is conducive to the rapid advancement of the product commercialization process. In addition, this configuration sets all the tilting rotors on the inner side of the fixed rotor; compared with the configuration in which the tilting rotors are set on the outer side, it can reduce the yaw moment after the partial failure of the tilting rotors, greatly reduce the requirements for the vertical tail capacity (vertical tail area multiplied by vertical tail force arm, which refers to the distance from the vertical tail's aerodynamic center to the aircraft's center of gravity), and expand the safe flight envelope after the partial failure of the tilting rotors.

### BRIEF DESCRIPTION OF THE DRAWINGS

In order to explain the embodiments of the present application or the technical solutions in the existing technology more clearly, the accompanying drawings needed to be used in the description of the embodiments or the existing technology will be briefly introduced below. Obviously, the accompanying drawings in the following description are only some embodiments of the present application, other accompanying drawings can be obtained based on the provided accompanying drawings without exerting creative efforts for those skilled in the art.
FIG. 1 is an isometric view of a vertical take-off and landing aircraft in a vertical take-off and landing state according to an embodiment of the present application.
FIG. 2 is a top view of the vertical take-off and landing aircraft in FIG. 1.
FIG. 3 is a front view of the vertical take-off and landing aircraft in FIG. 1.
FIG. 4 is a side view of FIG. 3.
FIG. 5 is an isometric view of the vertical take-off and landing aircraft in FIG. 1 in a horizontal flight state.
FIG. 6 is a top view of FIG. 5.
FIG. 7 is a front view of FIG. 5.
FIG. 8 is a side view of FIG. 7.
FIG. 9 is an isometric view of a vertical take-off and landing aircraft in a vertical take-off and landing state according to another embodiment of the present application.
FIG. 10 is a top view of the vertical take-off and landing aircraft in FIG. 9.
FIG. 11 is a front view of the vertical take-off and landing aircraft in FIG. 9;
FIG. 12 is a side view of FIG. 11.
FIG. 13 is an isometric view of the vertical take-off and landing aircraft in FIG. 9 in a horizontal flight state.
FIG. 14 is a top view of FIG. 13.
FIG. 15 is a front view of FIG. 13.
FIG. 16 is a side view of FIG. 15.
FIG. 17 is a front view of a vertical take-off and landing aircraft according to another embodiment of the present application.
FIG. 18 is a top view of the vertical take-off and landing aircraft in FIG. 17.
FIG. 19 is a side view of the vertical take-off and landing aircraft in FIG. 17.
FIG. 20 is an isometric view of the vertical take-off and landing aircraft in FIG. 17 in a vertical state.
FIG. 21 is an isometric view of the vertical take-off and landing aircraft in FIG. 17 in a horizontal flight state.
FIG. 22 is a front view of a vertical take-off and landing aircraft according to another embodiment of the present application.
FIG. 23 is a top view of the vertical take-off and landing aircraft in FIG. 22.
FIG. 24 is a side view of the vertical take-off and landing aircraft in FIG. 22.
FIG. 25 is an isometric view of the vertical take-off and landing aircraft in FIG. 22 in a vertical state.
FIG. 26 is an isometric view of the vertical take-off and landing aircraft in FIG. 22 in a horizontal state.
FIG. 27 is a three-dimensional view of a vertical take-off and landing aircraft in a vertical take-off state according to yet another embodiment of the present application.
FIG. 28 is a three-dimensional view of a vertical take-off and landing aircraft in a horizontal flight state according to yet another embodiment of the present application.
FIG. 29 is a rear view of a vertical take-off and landing aircraft in a vertical take-off state according to yet another embodiment of the present application.
FIG. 30 is a three-dimensional view of a vertical take-off and landing aircraft in a vertical take-off state according to yet another embodiment of the present application.
FIG. 31 is a three-dimensional view of a vertical take-off and landing aircraft in a horizontal flight state according to yet another embodiment of the present application.
FIG. 32 is a schematic view of a control method of a vertical take-off and landing aircraft according to an embodiment of the present application.

### Explanation of reference numbers:

10. fuselage; 11. longitudinal symmetry plane; 12. vertical plane; 20. wing; 30. empennage; 41. first tilting rotor; 411. third wing boom; 42. second tilting rotor; 421. fourth wing boom; 43. third tilting rotor; 431. fifth wing boom; 44. fourth tilting rotor; 441. sixth wing boom; 401. tilt-propeller; 51. first fixed rotor; 511. first wing boom; 52. second fixed rotor; 521. second wing boom; 53. third fixed rotor; 54. fourth fixed rotor; 60. first supporting arm; 70, first circumference; 80, second circumference; 90, second supporting arm.

### DETAILED DESCRIPTION OF THE EMBODIMENTS

The following is an explanation of the embodiments of the present application by specific examples. Those skilled in the art can easily understand other advantages and effects of the present application from the contents disclosed in this specification. The present application can also be implemented or applied by other different specific embodiments, and the details in this specification can also be modified or changed based on different viewpoints and applications without deviating from the spirit of the present application. It should be noted that the following embodiments and the features in the embodiments can be combined with each other without conflict. It should also be understood that the terms used in the embodiments of the present application are to describe specific embodiments, not to limit the scope of the present application. The test methods in the following examples that do not specify specific conditions are usually carried out under conventional conditions or under conditions recommended by various manufacturers.

When the examples give a numerical range, it should be understood that unless otherwise specified in the present application, the two endpoints of each numerical range and any value between the two endpoints can be selected. Unless otherwise defined, all technical and scientific terms used in the present application are in accordance with the prior art mastery and the records of the present application by the technicians in this field, and any methods, equipment and materials of the prior art similar to or equivalent to the methods, equipment and materials in the embodiments of the present application can also be used to implement the present application.

It should be noted that the terms such as "upper", "lower", "left", "right", "middle" and "one" cited in this specification are only for the convenience of description, and are not used to limit the scope of the present application. The change or adjustment of the relative relationship shall also be regarded as the scope of the present application without substantial change of the technical content.

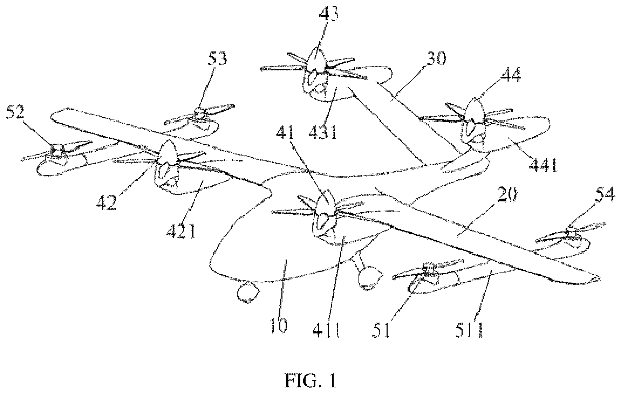

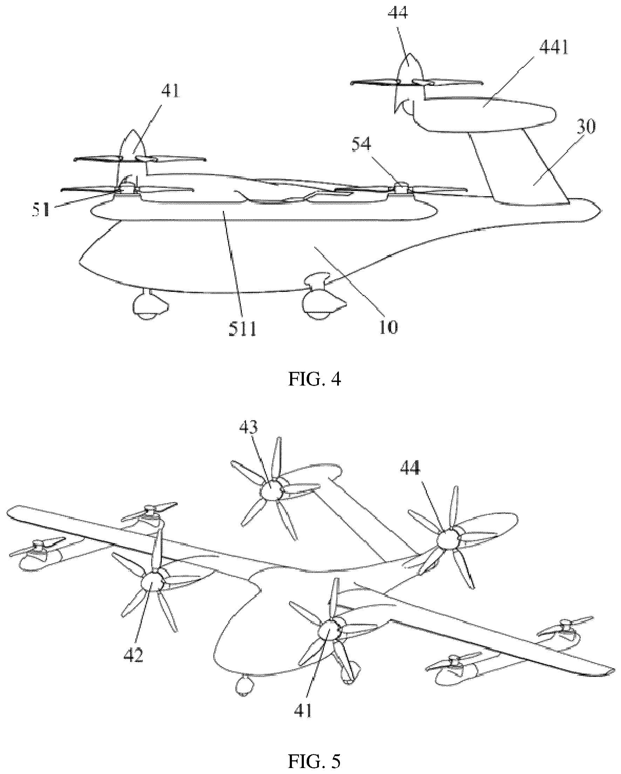

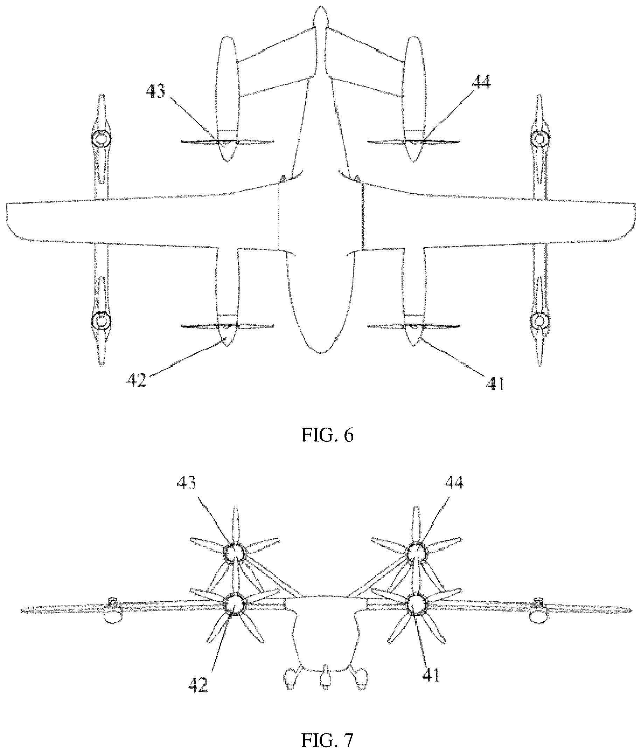

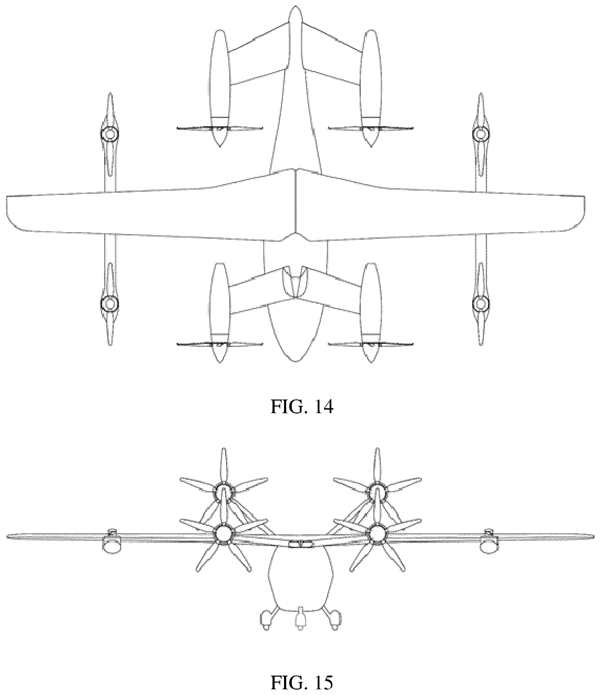

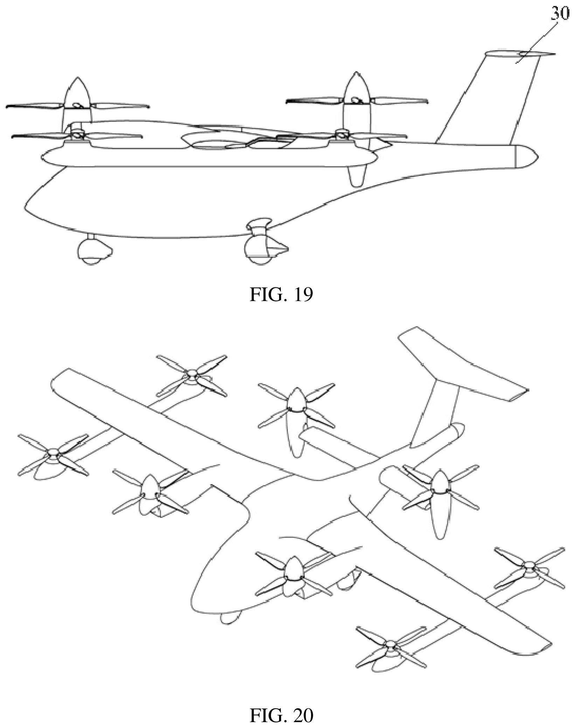

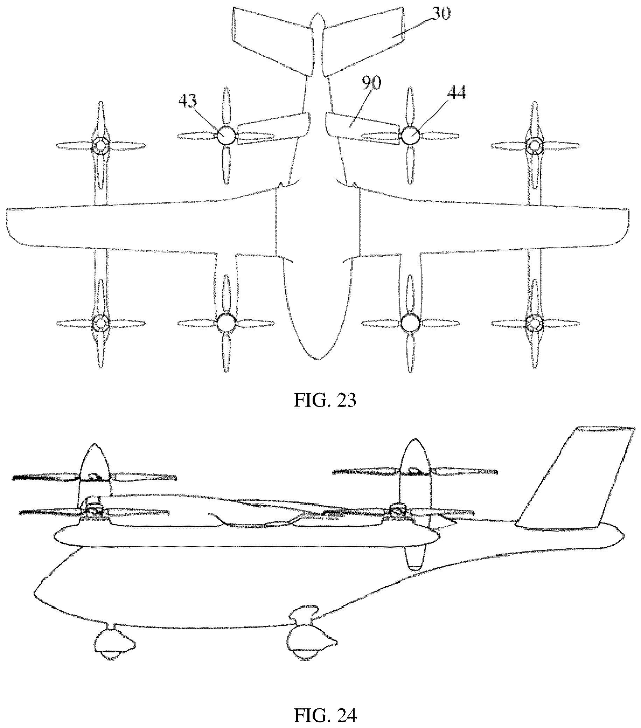

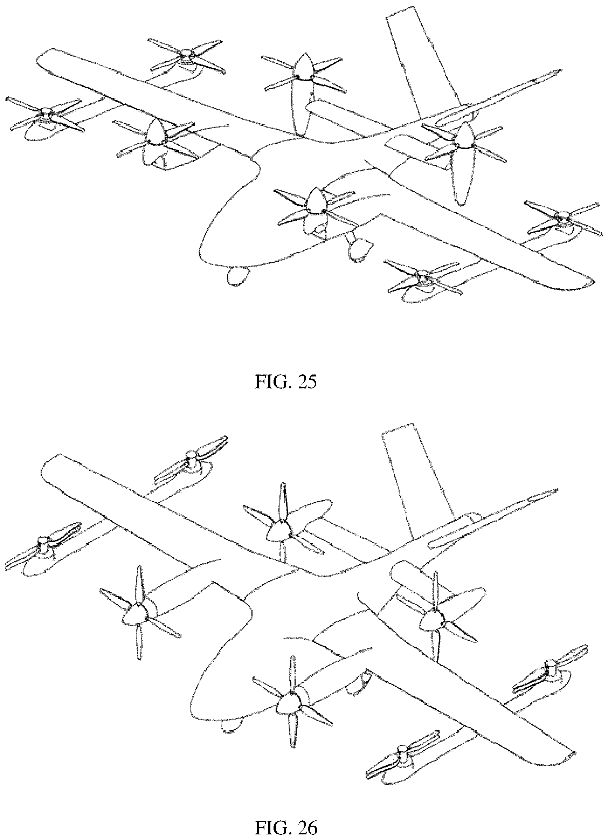

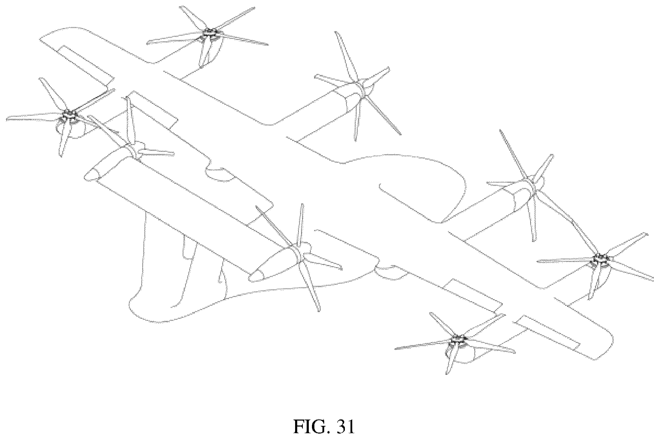

Referring to FIG. 1 to FIG. 32, the present application provides a vertical take-off and landing aircraft and a control method for a vertical take-off and landing aircraft to optimize the configuration of the vertical take-off and landing aircraft in the prior art, particularly applicable to the configuration of manned eVTOL (electric Vertical Take-off and Landing) aircraft.

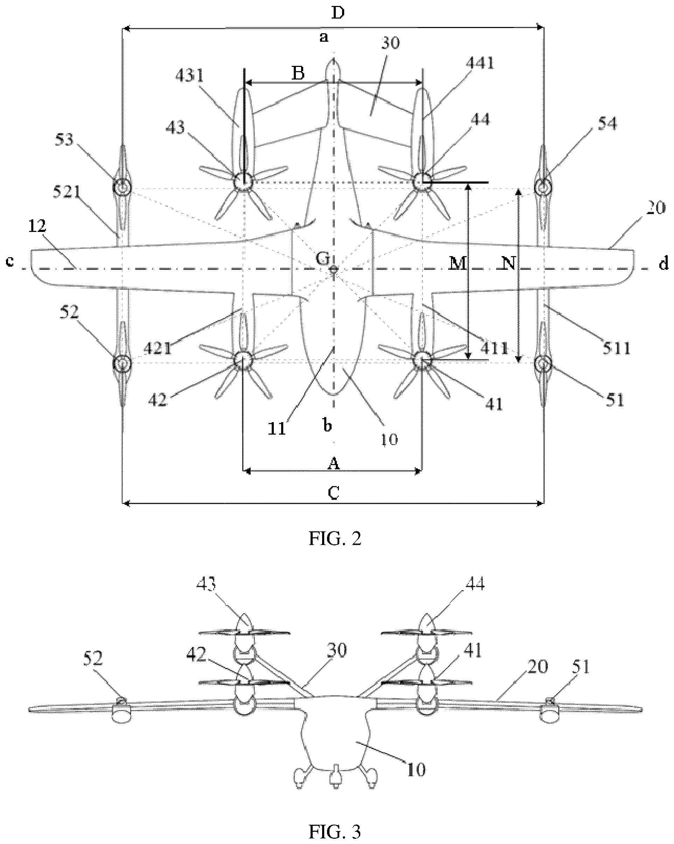

Referring to FIG. 1 to FIG. 17, the vertical take-off and landing aircraft includes: a fuselage 10, four tilting rotors and four fixed rotors. The fuselage 10 is a symmetrical structure and has a longitudinal symmetry plane 11 extending along the longitudinal axis direction of the fuselage (i.e., the vertical plane where the straight line ab located in FIG. 2). The remaining structure and shape of the fuselage 10 are not limited and can refer to the structure of fuselage 10 of an existing aircraft. For example, the fuselage 10 includes conventional aircraft operation systems such as an avionics system, a flight control system, an electrical system, a navigation system and so on installed on the fuselage 10. Wings 20 are provided at both sides of the fuselage 10. The wings 20 on both sides are symmetrical about the longitudinal symmetry plane 11 of the fuselage 10. The structure of the wings 20 can also refer to the structure of the fixed wing 20 of the existing aircraft, which will not be repeated here. In the present application, the four tilting rotors are respectively marked as the first tilting rotor 41, the second tilting rotor 42, the third tilting rotor 43, and the fourth tilting rotor 44. The first tilting rotor 41 and the second tilting rotor 42 are installed at the front side of the wing 20, and the first tilting rotor 41 is located at one side of the fuselage 10, and the second tilting rotor 42 is located at the other side of the fuselage 10. The third tilting rotor 43 and the fourth tilting rotor 44 are installed at the rear side of the wing 20 and are respectively located at both sides of the fuselage 10. The position, rotation direction and installation angle of the first tilting rotor 41 and the position, rotation direction and installation angle of the second tilting rotor 42 are correspondingly symmetrical relative to the longitudinal symmetry plane 11 of the fuselage 10; the position, rotation direction and installation angle of the third tilting rotor 43 and the position, rotation direction and installation angle of the fourth tilting rotor 44 are correspondingly symmetrical relative to the longitudinal symmetry plane 11 of the fuselage 10. The spacing between the first tilting rotor 41 and the second tilting rotor 42 at the front side of the wing 20 is A, the spacing between the third tilting rotor 43 and the fourth tilting rotor 44 at the rear side of the wing 20 is B, and the deviation between A and B is less than or equal to 0.2*(A+B)/2. On one hand, this arrangement can ensure that the rotor operating speed is as close as possible during the vertical take-off and landing state, which is conducive to the integration of propulsion systems; on the other hand, it can make the rotor configuration retain the central symmetry relative to the center of gravity as much as possible, which is conducive to the unification of emergency response strategies.

As shown in FIG. 2, the four fixed rotors are marked as the first fixed rotor 51, the second fixed rotor 52, the third fixed rotor 53 and the fourth fixed rotor 54, respectively. The first fixed rotor 51 and the fourth fixed rotor 54 are located at the same side of the fuselage 10 and are located outside the first tilting rotor 41 and the fourth tilting rotor 44 in the span direction. The first fixed rotor 51 is located at the front side of the wing 20, and the fourth fixed rotor 54 is located at the rear side of the wing 20. The second fixed rotor 52 and the third fixed rotor 53 are located at the other side of the fuselage 10 and are located outside the second tilting rotor 42 and the third tilting rotor 43 in the span direction. The second fixed rotor 52 is located at the front side of the wing 20, and the third fixed rotor 53 is located at the rear side of the wing 20. The position, rotation direction and installation angle of the first fixed rotor 51 and the position, rotation direction and installation angle of the second fixed rotor 52 are symmetrical relative to the longitudinal symmetry plane 11. The position, rotation direction and installation angle of the third fixed rotor 53 and the position, rotation direction and installation angle of the fourth fixed rotor 54 are symmetrical relative to the longitudinal symmetry plane 11. The spacing between the first fixed rotor 51 and the second fixed rotor 52 at the front side of the wing is C, the spacing between the third fixed rotor 53 and the fourth fixed rotor 54 at the rear side of the wing is D; and the deviation between C and D is less than or equal to 0.05*(C+D)/2.

Referring to FIG. 2, in the vertical take-off and landing state, the projection of the first tilting rotor 41 on the horizontal plane and the projection of the third tilting rotor 43 on the horizontal plane are centrally symmetrical about the center of gravity (point G) of the vertical take-off and landing aircraft within a first setting range, and the projection of the second tilting rotor 42 on the horizontal plane and the projection of the fourth tilting rotor 44 on the horizontal plane are centrally symmetrical about the center of gravity of the vertical take-off and landing aircraft within the first setting range. The position of the horizontal projection of the first tilting rotor 41 and the position of the horizontal projection of the fourth tilting rotor 44 are symmetrical about the vertical plane 12 (i.e., the vertical plane where the straight line cd located in FIG. 2) passing through the center of gravity and perpendicular to the longitudinal symmetry plane 11. The position of the horizontal projection of the second tilting rotor 42 and the position of the horizontal projection of the third tilting rotor 43 are symmetrical about the vertical plane 12 passing through the center of gravity G and perpendicular to the longitudinal symmetry plane 11. Both the longitudinal spacing between the horizontal projection of the first tilting rotor 41 and the horizontal projection of the fourth tilting rotor 44 and the longitudinal spacing between the horizontal projection of the second tilting rotor 42 and the horizontal projection of the third tilting rotor 43 are M. The first setting range is that the longitudinal deviation between an intersection, which is the intersection of the diagonal line connecting the horizontal projection of the first tilting rotor 41 and the horizontal projection of the third tilting rotor 43 and the diagonal line connecting the horizontal projection of the second tilting rotor 42 and the horizontal projection of fourth tilting rotor 44, and the horizontal projection of the center of gravity is less than or equal to 0.1*M.

Referring to FIG. 2, in the vertical take-off and landing state, the projection center of the first fixed rotor 51 on the horizontal plane and the projection center of the third fixed rotor 53 on the horizontal plane correspond to each other and are centrally symmetrical about the center of gravity within the second setting range; the projection center of the second fixed rotor 52 on the horizontal plane and the projection center of the fourth fixed rotor 54 on the horizontal plane correspond to each other and are centrally symmetrical about the center of gravity within the second setting range. The horizontal projection position of the first fixed rotor 51 and the horizontal projection position of the fourth fixed rotor 54 are symmetrical about the vertical plane 12 passing through the center of gravity and perpendicular to the longitudinal symmetry plane 11. The horizontal projection position of the second fixed rotor 52 and the horizontal projection position of the third fixed rotor 53 are symmetrical about the vertical plane 12 passing through the center of gravity and perpendicular to the longitudinal symmetry plane 11. Both the longitudinal spacing between the horizontal projection of the first fixed rotor 51 and the horizontal projection of the fourth fixed rotor 54 and the longitudinal spacing of the horizontal projection of the second fixed rotor 52 and the horizontal projection of the third fixed rotor 53 are N. The second setting range is that the longitudinal deviation between an intersection, which is the intersection of the diagonal line connecting the horizontal projection of the first fixed rotor 51 and the horizontal projection of the third fixed rotor 53 and the diagonal line connecting the horizontal projection of the second fixed rotor 52 and the horizontal projection of the fourth fixed rotor 54, and the horizontal projection of the center of gravity is less than or equal to 0.1*N.

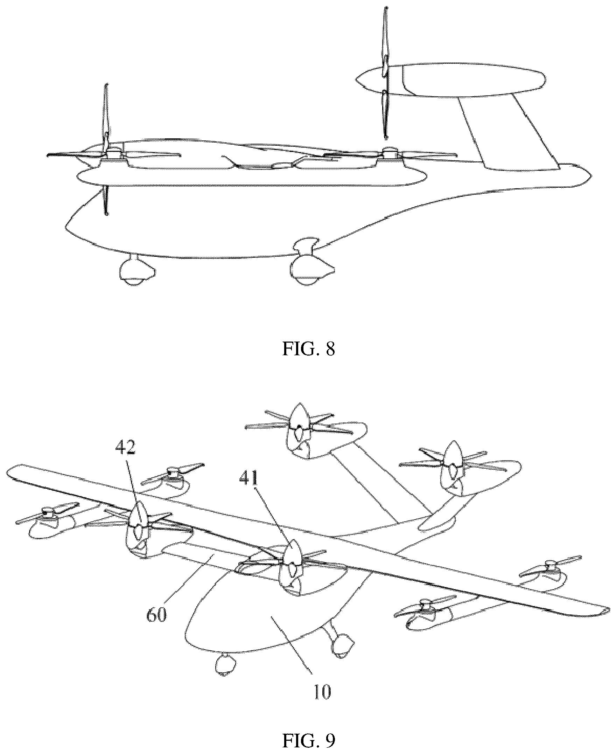

The specific position and installation method of the tilting rotor on the fuselage 10 and/or the wing 20 in the present application are not limited, as long as the above-mentioned position relationship limitation is met. For example, the tilting rotor at the front side of the wing 20 and the rear side of the wing 20 can be installed at the wing 20 by wing booms; or the tilting rotor at the front side of the wing 20 and/or the rear side of the wing 20 can be installed at the fuselage 10 by a supporting arm; the tilting rotor at the front side of the wing 20 can also be installed at the wing 20 by a wing boom, and the tilting rotor at the rear side of the wing 20 can be installed at the fuselage 10 or the empennage 30 by a supporting arm. Similarly, the tilting rotor at the front side of the wing 20 can also be installed at the fuselage 10 by a supporting arm, and the tilting rotor at the rear side of the wing 20 can be installed at the wing 20 by a wing boom. As shown in FIG. 1 to FIG. 8, the first tilting rotor 41 and the second tilting rotor 42 are installed at the wing 20 by a wing boom, and can also be installed at the fuselage 10 at the front side of the wing 20 by a first supporting arm 60 as shown in FIG. 9 to FIG. 16.

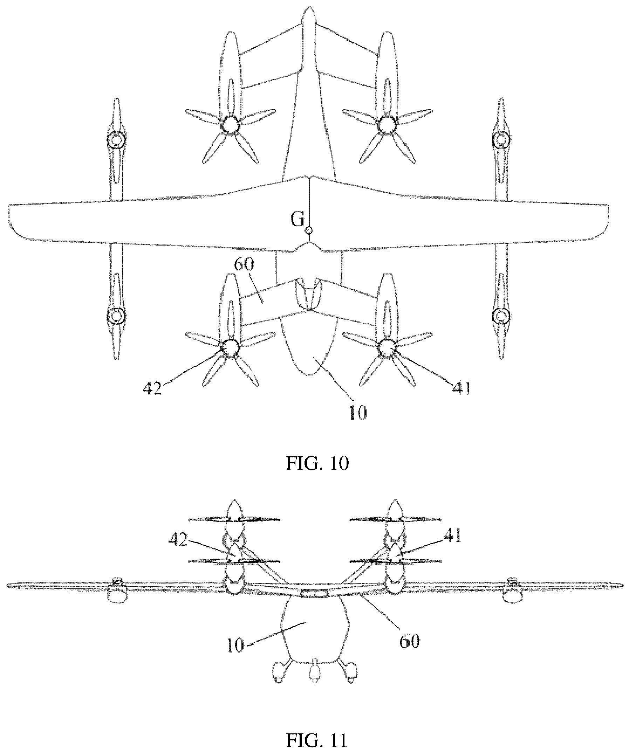

Referring to FIG. 2 and FIG. 10, the wing 20 at one side of the fuselage 10 is equipped with a first wing boom 511, and the wing 20 at the other side of the fuselage 10 is equipped with a second wing boom 521; the first wing boom 511 and the second wing boom 521 are symmetrically provided about the longitudinal symmetry plane 11 of the fuselage 10. Four fixed rotors are symmetrically installed on the first wing boom 511 and the second wing boom 521 at both sides of the fuselage 10, and are respectively located on the front and rear sides of the wing 20 and the front and rear ends of the first arm wing boom 511 and the second arm wing boom 521; at the same time, the projections of all the fixed rotors on the horizontal plane are pairwise correspondence and roughly centrally symmetrical about the center of gravity of the vertical take-off and landing aircraft. It should be noted that in the present application, the fixed rotors are located at outer side of all the tilting rotors, which can be outer side in any direction, and the specific direction is not limited; but in an embodiment, in order to optimize the structure and reduce the weight, the four fixed rotors in this embodiment are located at outer side of spanwise direction of all the tilting rotors.

In an embodiment of the present application, an empennage 30 is provided at a tail of the fuselage 10. The empennage 30 is integrally formed with the fuselage 10 or mechanically connected to the fuselage 10, and is symmetrical about the longitudinal symmetry plane 11 of the fuselage 10. The empennage is any one of a V-shaped empennage, a Y-shaped empennage, an H-shaped empennage, an X-shaped empennage, a T-shaped empennage, or a U-shaped empennage. However, in some other embodiments, the empennage 30 may not be provided. Referring to FIG. 2, in an embodiment of the present application, the empennage 30 is a V-shaped empennage. Two of the four tilting rotors are installed on the empennage 30, and the rest of the four tilting rotors are installed on the fuselage 10 and/or the wing 20. In the vertical take-off and landing state, the projections of all the tilting rotors on the horizontal plane are roughly symmetrical about the center of gravity of the vertical take-off and landing aircraft. The fixed rotors are provided at the outer side of the tilting rotors on both sides, and the projections of all the fixed rotors on the horizontal plane are roughly symmetrical about the center of gravity of the vertical take-off and landing aircraft. This configuration can reduce the thrust that the remaining power units needs to output when a single rotor fails. The present application not only takes into account the advantages of the Lift+Cruise configuration, the all-tiltrotor configuration and the partial-tiltrotor configuration, but also reduces the problem of transition corridor narrowed caused by tilting through this configuration, and also reduces the design and installation difficulty of the vertical take-off and landing aircraft, which is conducive to the rapid advancement of the product commercialization process. In addition, this configuration sets all the tilting rotors on the inner side of the fixed rotors; compared with the configuration in which the tilting rotors are set on the outer side, it can reduce the yaw moment after the partial failure of the tilting rotors, greatly reduce the requirements for the vertical tail capacity, and expand the safe flight envelope after the partial failure of the tilting rotors.

In an embodiment of the present application of the vertical take-off and landing aircraft, at least part of the four tilting rotors are provided at the front side of the center of gravity, and at least part of the four tilting rotors are provided at the rear side of the center of gravity. At least part of the four fixed rotors are provided at the front side of the center of gravity of the vertical take-off and landing aircraft, and at least part of the four fixed rotors are provided at the rear side of the center of gravity of the vertical take-off and landing aircraft. This can help achieve the balance of multiple force couples, and can make the vertical take-off and landing process of the vertical take-off and landing aircraft more stable. In an embodiment, referring to FIG. 2 and FIG. 10, the four fixed rotors are symmetrically installed at both sides of the fuselage 10, the four tilting rotors are located at the inner sides of the four fixed rotors, two tilting rotors are installed at the empennage 30, and two tilting rotors are installed on the fuselage 10 in front of the wing 20 or the wing 20. A third wing boom 411 is provided on the wing 20 at one side of the fuselage 10; a symmetrical fourth wing boom 421 is provided on the wing 20 at the other side of the fuselage 10, the first tilting rotor 41 is installed on the third wing boom 411, and the second tilting rotor 42 is installed on the fourth wing boom 421 and is symmetrical with the first tilting rotor 41 about the longitudinal symmetry plane 11 of the fuselage 10. A fifth wing boom 431 is provided on the empennage 30 on one side of the fuselage 10; a symmetrical sixth wing boom 441 is provided on the empennage 30 on the other side of the fuselage 10, the third tilting rotor 43 is installed at the fifth wing boom 431, and the fourth tilting rotor 44 is installed at the sixth wing boom 441 and is symmetrically provided about the symmetric plane of the fuselage 10. The third tilting rotor 43 and the fourth tilting rotor 44 are symmetrically provided about the symmetric plane of the fuselage 10. The first fixed rotor 51 and the second fixed rotor 52 are symmetrical about the longitudinal symmetry plane 11 of the fuselage 10, the third fixed rotor 53 and the fourth fixed rotor 54 are also symmetrical about the longitudinal symmetry plane of the fuselage 10, the rotating shafts of the four fixed rotors are all extended upward in the vertical direction, the projection of the first fixed rotor 51 on the horizontal plane and the projection of the third fixed rotor 53 on the horizontal plane are roughly centrally symmetrical about the center of gravity of the vertical take-off and landing aircraft, and the projection of the second fixed rotor 52 on the horizontal plane and the projection of the fourth fixed rotor 54 on the horizontal plane are roughly centrally symmetrical about the center of gravity of the vertical take-off and landing aircraft. It should be noted that in the present application, the front side refers to the extension direction toward the aircraft nose, and the rear side refers to the extension direction toward the side of the empennage 30.

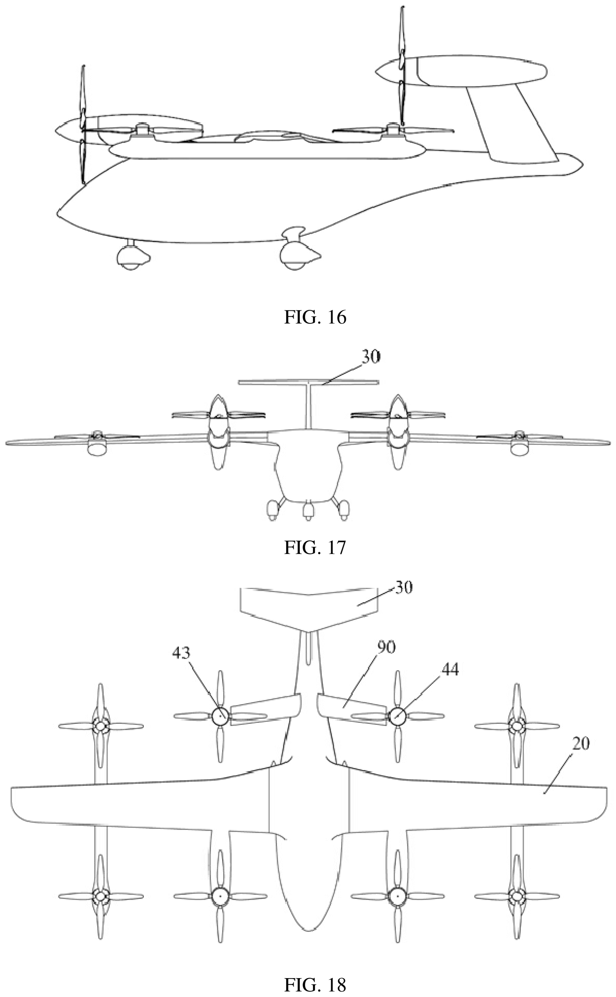

Referring to FIG. 18 to FIG. 22, the present application also provides a vertical take-off and landing aircraft, which is different from the vertical take-off and landing aircraft in FIG. 2 in that the empennage 30 of the vertical take-off and landing aircraft is T-shaped, and the third tilting rotor 43 and the fourth tilting rotor 44 are not installed on the empennage 30, but are installed on the fuselage between the empennage 30 and the wing 20 by the second supporting arm 90. The four tilting rotors at the inner side of this scheme are also pairwise correspondence and roughly symmetrical about the center of gravity of the vertical take-off and landing aircraft, and the four fixed rotors at the outer side are also pairwise correspondence and roughly symmetrical about the center of gravity of the vertical take-off and landing aircraft. This configuration can also have the advantages of the vertical take-off and landing aircraft in FIG. 2.

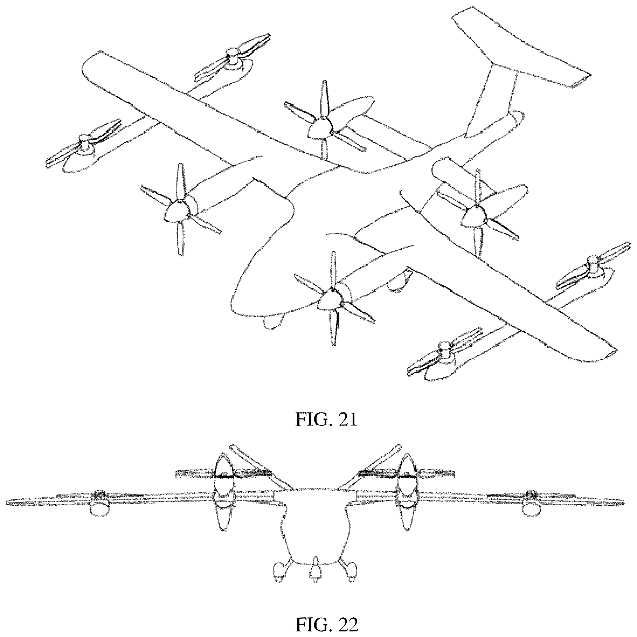

Referring to FIG. 22 to FIG. 26, the present application also provides a vertical take-off and landing aircraft, which is different from the vertical take-off and landing aircraft in FIG. 2 in that the third tilting rotor 43 and the fourth tilting rotor 44 are not installed on the V-shaped empennage 30, but are installed on the fuselage between the empennage 30 and the wing 20 by the second supporting arm 90. The four tilting rotors at the inner side of this scheme are also pairwise correspondence and roughly symmetrical about the center of gravity of the vertical take-off and landing aircraft, and the four fixed rotors at the outer side are also pairwise correspondence and roughly symmetrical about the center of gravity of the vertical take-off and landing aircraft. This configuration form can also have the advantages of the vertical take-off and landing aircraft in FIG. 2.

In the present application, the tilting rotor on the empennage 30 is installed at the upper side of the empennage 30 and tilts upward in the vertical take-off and landing state. This reduces the possibility of the rotor causing harm to the passengers when the passengers enter and exit the aircraft. Referring to FIG. 1 to FIG. 17, in an embodiment of the vertical take-off and landing aircraft of the present application, the empennage 30 is a V-shaped empennage, and two tilting rotors are installed on the empennage 30. The two tilting rotors are respectively installed on the tips of the tail on both sides of the upper part of the empennage 30. In other embodiments, it can also be any of the above shapes.

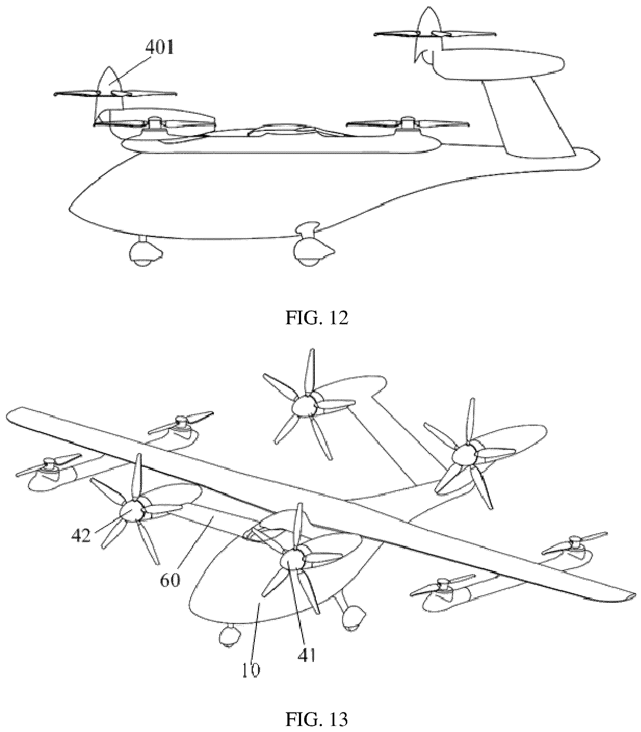

Referring to FIG. 12, it should be noted that in the present application, the tilting rotor includes a tilt-propeller 401 and a tilt-drive device (not shown). The base of the tilt-drive device is fixedly installed on the empennage 30 or installed at the front side of the wing 20. The tilt-propeller 401 is installed at the driving end of the tilt-drive device and can be tilted and locked between the horizontal direction and the vertical direction. The specific structure of the tilt-drive device and the tilt-propeller 401 can be referred to the prior art and will not be described in detail here.

In an embodiment of the vertical take-off and landing aircraft of the present application, the tilting rotor at the front side of the wing 20 is installed on the fuselage 10 at the front side of the wing 20 by a first supporting arm 60. The shape of the first supporting arm 60 corresponds to the shape of the empennage 30. The tilting rotor on the empennage 30 is higher than the tilting rotor on the front side of the wing 20.

It should also be noted that the existing tilting rotor includes "tilting-nacelle rotor" and "tilting-propeller rotor". The existing "tilting-nacelle rotor" and "tilting-propeller rotor" both include rotors and power pods. The rotors rotate to provide lifting force. The power pods can be installed with motors or other control components that drive the rotors to rotate. "tilting-propeller rotor" often cut off the power pods. During the rotor tilting process, the part close to the rotors tilts with the rotors, and the part away from the rotors is relatively fixed to the fuselage. In "tilting-nacelle rotor", the entire power pod tilts with the corresponding rotors. Considering the complexity of the airflow field and flight safety during flight, how to arrange the tilting rotors and fixed rotors to optimize the airflow anti-interference ability and flight stability of vertical take-off and landing aircraft will be extremely challenging. In this application, the four tilting rotors can all be "tilting-propeller rotor", or all be "tilting-nacelle rotor", or some can be "tilting-propeller rotor" and some can be "tilting-nacelle rotor".

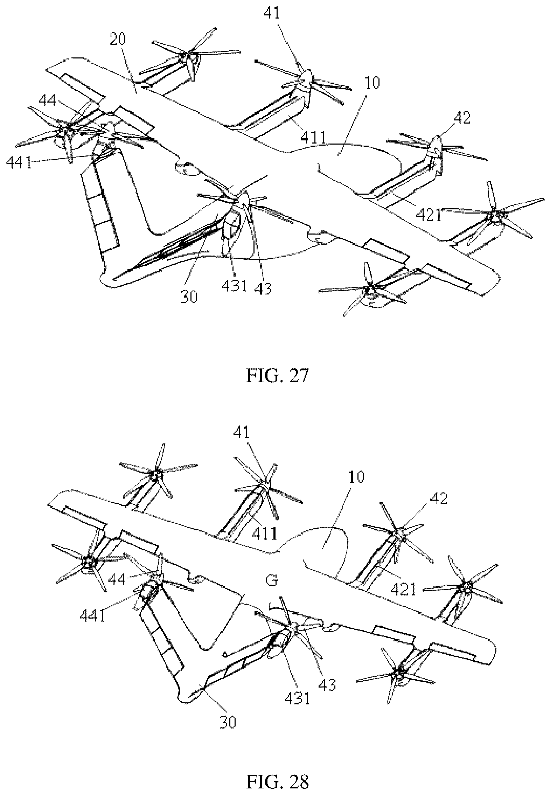

Referring to FIG. 27 to FIG. 28, the present application also provides a vertical take-off and landing aircraft, which is different from the vertical take-off and landing aircraft in FIG. 2 in that the four tilting rotors include at least two tilting-nacelle rotors, and all the tilting-nacelle rotors are symmetrically provided about the symmetry plane of the fuselage 10. In an embodiment, the third tilting rotor 43 and the fourth tilting rotor 44 on the empennage 30 at the rear side of the wing 20 of the vertical take-off and landing aircraft are tilting-nacelle rotors, and the first tilting rotor 41 and the second tilting rotor 42 at the front side of the wing 20 are tilting-propeller rotor. In the vertical take-off and landing state, the first tilting rotor 41, the second tilting rotor 42, the third tilting rotor 43 and the fourth tilting rotor 44 are all tilted upward to the vertical take-off and landing position, and are pairwise correspondence and roughly centrally symmetrical about the center of gravity of the vertical take-off and landing aircraft. The four outer fixed rotors are pairwise correspondence and roughly centrally symmetrical about the center of gravity of the vertical take-off and landing aircraft. This configuration can also have the advantages of the vertical take-off and landing aircraft in FIG. 2. It can be understood by those skilled in the art that if the installation conditions permit, all the tilting rotors can also be provided to a form of the tilting-nacelle rotor.

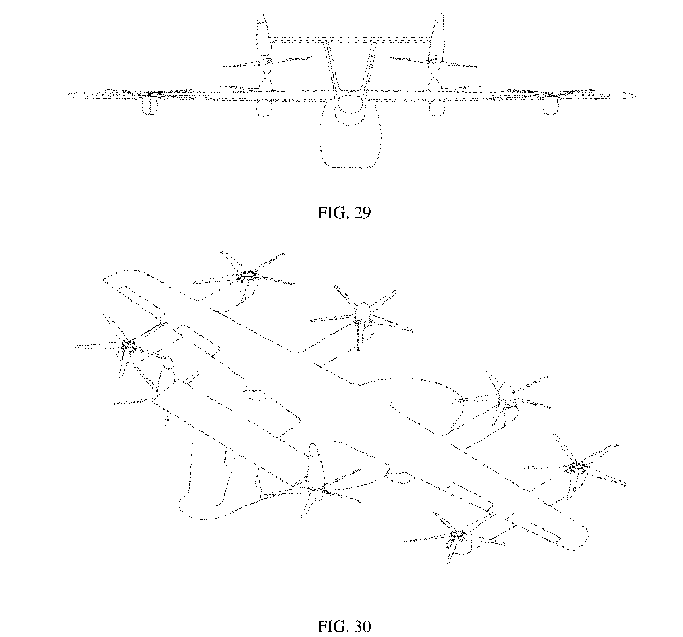

Referring to FIG. 29 to FIG. 31, the present application also provides a vertical take-off and landing aircraft, which is different from the vertical take-off and landing aircraft in FIG. 2 in that the empennage 30 of the vertical take-off and landing aircraft is a π-shaped empennage, the third tilting rotor and the fourth tilting rotor on the empennage are installed at both sides of the horizontal tail of the π-shaped empennage and are configured to tilt downward to the vertical take-off and landing position. The third tilting rotor and the fourth tilting rotor can be tilting-nacelle rotors or tilting-propeller rotors. In this embodiment, the third tilting rotor and the fourth tilting rotor are tilting-nacelle rotors. In the vertical take-off and landing state, the four tilting rotors at the inner side of this scheme are also pairwise correspondence and roughly symmetrical about the center of gravity of the vertical take-off and landing aircraft, and the four fixed rotors at the outer side are also pairwise correspondence and roughly symmetrical about the center of gravity of the vertical take-off and landing aircraft. This configuration can also have the advantages of the vertical take-off and landing aircraft in FIG. 2.

In an embodiment of the present application, each of the fixed rotors includes a folding rotor (not shown) and a fixed rotor drive device (not shown). The fixed rotor drive device in the present application can be a motor, or a combination of a motor and a reducer. The folding rotor in this embodiment includes a fixed blade (not shown) and a floating blade (not shown). When the aircraft is in the hovering stage, the fixed blade and the floating blade rotate in a shape of the Chinese character " 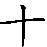 " in a crossed state under the drive of the fixed rotor drive device. When the aircraft is in the horizontal cruising stage, when the fixed rotor drive device stops working, the fixed blade and the floating blade close in a shape of the Chinese character " 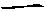 " following the airflow, and the extension direction of each fixed blade and the floating blade is consistent with the heading of the aircraft. This setting method can reduce the drag during the cruise. It should be noted that the fixed blade and the floating blade in the present application rotate in a cross state when rotating, and the implementation method of folding when stopping can be achieved by all existing suitable folding rotor forms, which will not be repeated here. Certainly, it can be understood by those skilled in the art that if the better effect is not considered, all fixed rotors in the present application may not adopt the form of foldable blades.

The present application also provides a control method for the above-mentioned vertical take-off and landing aircraft, including: the following transition process from vertical take-off to horizontal flight and/or the transition process from horizontal flight to vertical landing.

The transition process from vertical take-off to horizontal flight includes:
tilting, by the powered system, the four tilting rotors forward according to a forward flight command;
configuring tilt rates of the four tilting rotors, and thrust distribution of the four tilting rotors and the four fixed rotors according to a climb command, thereby controlling rate of climb of the vertical take-off and landing aircraft and angle of climb of the vertical take-off and landing aircraft,

The transition process from horizontal flight to vertical landing includes:
tilting, by the powered system, the four tilting rotors upward to a vertical take-off and landing position according to the speed command; and
configuring the tilt rates of the four tilting rotors, and the thrust distribution of the four tilting rotors and the four fixed rotors according to a descent command, thereby controlling rate of descent of the vertical take-off and landing aircraft and angle of descent of the vertical take-off and landing aircraft.

In an embodiment of the control method of the present application, the method further includes an unintentional spin or stall recovery process and/or a crosswind response process.

The unintentional spin or stall recovery process includes: starting the four fixed rotors to assist in attitude control, thereby recovering from the spin or stall condition. It should be noted that the "spin" is a continuous automatic rotational movement that occurs after the angle of attack of the aircraft exceeds the critical angle of attack. During the spin, the aircraft rotates along a spiral track with a small radius while rapidly descending, and simultaneously rotates around the three axes of roll, pitch, and yaw. The "stall" is a phenomenon in which the lift coefficient of the wing of an aircraft (mostly referring to an airplane) decreases as the angle of attack increases after the angle of attack exceeds a certain critical value. When stalling, the aircraft will produce an uncontrolled dive and bumpy movement, the engine will vibrate, and the pilot will feel abnormal control.

The crosswind response process includes: when the wind speed exceeds a preset threshold, assisting yaw control by differential thrust of the four tilting rotors to counteract the crosswind.

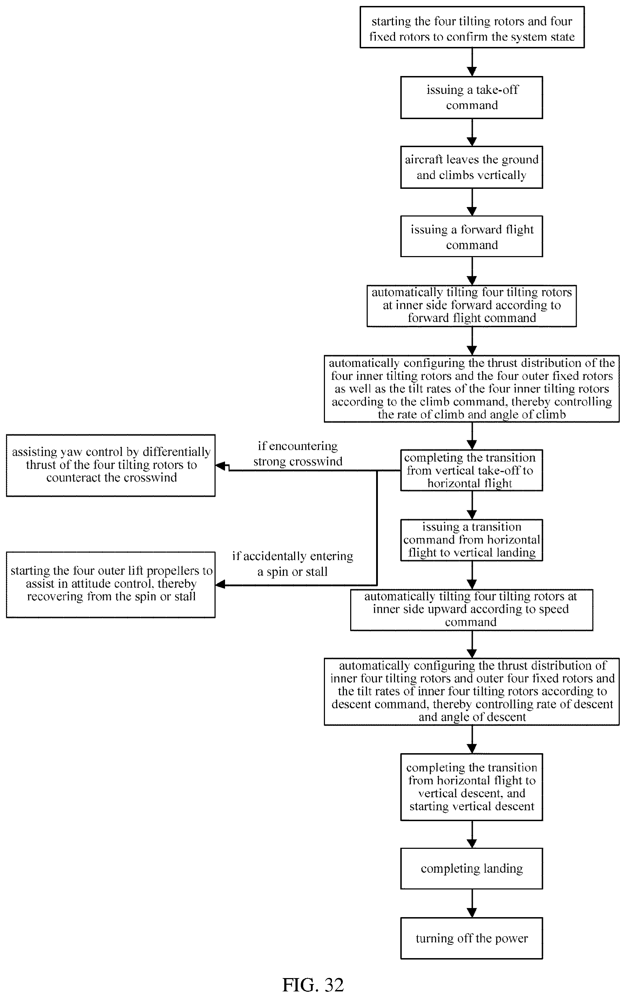

Certainly, the control method of the present application can also include more control process. Referring to FIG. 32, the following takes four fixed rotors and four tilting rotors as an example to provide a control method, including:

Starting the four tilting rotors and four fixed rotors to confirm the system state. → If the system state is normal, issuing a take-off command. → Keeping the four fixed rotors and four tilting rotors in the vertical take-off and landing position rotating until the aircraft leaves the ground and climbs vertically to the set altitude. → Issuing a forward flight command. → Controlling the four tilting rotors at the inner side to automatically tilt forward according to the forward flight command. → Automatically configuring the tilt rates of the four tilting rotors, and the thrust distribution of the four tilting rotors and the four fixed rotors according to the climb command, so as to control the rate of climb and angle of climb until the transition from vertical take-off to horizontal flight is completed → Issuing a transition command from horizontal flight to vertical landing. → According to the transition command from horizontal flight to vertical landing, automatically tilting the four tilting rotors at the inner side upward. → Automatically configuring the tilt rates of the four tilting rotors and the thrust distribution of the four tilting rotors and the four fixed rotors according to the descent command, thereby controlling the rate of descent and angle of descent. → Completing the transition from horizontal flight to vertical descent, and starting vertical descent. → Completing landing. → Turning off the power.

During the horizontal flight, if accidentally entering a spin or stall, it can also include an unintentional spin or stall recovery process. The unintentional spin or stall recovery process includes: starting the four fixed rotors to assist in attitude control, thereby recovering from the spin or stall condition.

If encountering strong crosswind with a wind speed exceeding a preset threshold, it can also include a crosswind response process. The crosswind response process includes: when the wind speed exceeds a preset threshold, assisting yaw control by differential thrust of the four tilting rotors to counteract the crosswind.

Taking the electric vertical take-off and landing aircraft with four fixed rotors and four tilting rotors as an example, the vertical take-off and landing aircraft of the present application has the following advantages.
1) During the transition process, attitude adjustment can be adjusted by using four fixed rotors and four tilting rotors together, or only using four fixed rotors to achieve pitch control by the thrust differential of the front fixed rotors and rear fixed rotors, and the thrust differential of the left fixed rotors and right fixed rotors to achieve roll control, with an additional set of independent non-similar three-axis channels to control the complete functional redundancy, which not only improves safety but also simplifies the control algorithm.
2) During the horizontal flight process, after any single engine fails, the additional yaw moment can be balanced by the rudder, which can maximize the retention of residual power and ensure that the performance is still high after a single engine fails. In extreme cases, it has the capability to continue flying after even double-engine failure or triple-engine failure.
3) During horizontal flight, if there are abnormal situations such as failure of control surface, stall or spin, compared with the all-tiltrotor configuration and the front half-tilting rotor configuration, the fixed rotor can be used to recovery from the abnormal situation (the symmetrically arranged fixed rotors can realize the control of six rotation vectors), which inherits the advantages of the Lift+Cruise configuration and improves the safety of the horizontal flight (especially when the altitude reserve is insufficient).
4) If the tilt actuation function fails completely or the tilting rotor thrust is completely lost, the fixed rotor can still be used for "controlled emergency landing", which improves safety.
5) If the propulsion system loses energy completely during hovering or transition, the collective pitch of the inner tilting rotor can be adjusted to achieve "controlled emergency landing" (six rotation vectors can be controlled), achieving the ability of autorotation similar to that of a helicopter.
6) Compared with the structure of the four tilting rotors in front of the wing, the windward area of the fixed rotor is reduced, which is conducive to reducing drag.
7) Compared with the all-tiltrotor configuration, it is beneficial to adjust the angle of climb or angle of descent by adjusting the thrust distribution of the four tilting rotors at the inner side and the four fixed rotors at the outer side, which is beneficial for taking off and landing in complex environments in cities.

In summary, the present application adopts a special configuration, which not only take into account the advantages of Lift+Cruise configurations, all-tiltrotor configuration and partial-tiltrotor configuration, but also widen the transition corridor by this configuration, and also reduces the difficulty of research and development of vertical take-off and landing aircraft, which is conducive to the rapid advancement of the product commercialization process. Therefore, the present application effectively overcomes some practical problems in the prior art and has high utilization value and use significance.

The above embodiments are only illustrative of the principles and effects of the present application, and are not used to limit the present application. Anyone familiar with this technology can modify or change the above embodiments without violating the spirit and scope of the present application. Therefore, all equivalent modifications or changes made by those with ordinary knowledge in the relevant technical field without departing from the spirit and technical ideas disclosed by the present application should still be covered by the claims of the present application.

## Claims

1. A vertical take-off and landing aircraft, **characterized by** comprising:
a fuselage, wherein both sides of the fuselage are provided with wings symmetrically;
four tilting rotors, respectively provided at front sides of the wings on both sides and rear sides of the wings on both sides; wherein positions of the four tilting rotors, rotation directions of the four tilting rotors and installation angles of the four tilting rotors are pairwise correspondence and symmetrical about a longitudinal symmetry plane of the fuselage; a spacing between two tilting rotors at the front sides of the wings is A, a spacing between the two tilting rotors at the rear sides of the wings is B, and a deviation between A and B is less than or equal to 0.2*(A+B)/2;
four fixed rotors, respectively provided at outer sides of the tilting rotors at both sides of the fuselage, and provided at the front sides and the rear sides of the wings; wherein positions of the four fixed rotors, rotation directions of the four fixed rotors and installation angles of the four fixed rotors are pairwise correspondence and symmetrical about the longitudinal symmetry plane; a spacing between two fixed rotors at the front sides of the wings is C, a spacing between two fixed rotors on the rear sides of the wings is D, and a deviation between C and D is less than or equal to 0.05*(C+D)/2;
wherein, in vertical take-off and landing state, projections of the four tilting rotors on a horizontal plane are pairwise correspondence and centrally symmetrical about a center of gravity of the vertical take-off and landing aircraft within a first setting range, and positions are symmetrical about a vertical plane passing through the center of gravity and perpendicular to the longitudinal symmetry plane; a spacing of horizontal projections of the tilting rotors along a longitudinal direction is M; the first setting range is that a longitudinal deviation between an intersection of diagonal lines of the horizontal projections of the four tilting rotors and a horizontal projection of the center of gravity is less than or equal to 0.1*M; projection centers of the four fixed rotors on the horizontal plane are pairwise correspondence and centrally symmetrical about the center of gravity within a second setting range, and positions are symmetrical about the vertical plane; a longitudinal spacing of horizontal projections of the fixed rotors is N, and the second setting range is that a longitudinal deviation between an intersection of diagonal lines of the horizontal projections of the four fixed rotors and the horizontal projection of the center of gravity is less than or equal to 0.1*N.

2. The vertical take-off and landing aircraft according to claim 1, wherein the tilting rotor at the front side of the wing and/or the tilting rotor at the rear side of the wing are provided at the wing by a wing boom.

3. The vertical take-off and landing aircraft according to claim 1, wherein the tilting rotor at the front side of the wing and/or the tilting rotor at the rear side of the wing are provided at the fuselage by a supporting arm.

4. The vertical take-off and landing aircraft according to claim 1, wherein the tilting rotor at the front side of the wing is provided at the wing by a wing boom, and the tilting rotor at the rear side of the wing is provided at the fuselage by a supporting arm.

5. The vertical take-off and landing aircraft according to claim 1, wherein a empennage is provided at a tail of the fuselage, and the empennage is any one of a V-shaped empennage, a Y-shaped empennage, an H-shaped empennage, an X-shaped empennage, a T-shaped empennage, or a U-shaped empennage.

6. The vertical take-off and landing aircraft according to claim 5, wherein the two tilting rotors are provided at the empennage and configured to provide forward thrust for the aircraft to fly forward, and are configured to tilt upward to provide vertical thrust in response to the aircraft being in a vertical take-off and landing state.

7. The vertical take-off and landing aircraft according to claim 6, wherein the empennage is a V-shaped tail, and the two tilting rotors at the rear side of the wing are respectively provided at tips of the tail on both sides of an upper part of the empennage.

8. The vertical take-off and landing aircraft according to claim 1, wherein the wings on both sides of the fuselage are provided with wing booms, and the four fixed rotors are symmetrically provided at the wing booms on both sides of the fuselage and are respectively provided at the front sides of the wings and the rear sides of the wings.

9. A control method for the vertical take-off and landing aircraft according to any one of claims 1 to 8, **characterized by** comprising: following transition process from vertical take-off to horizontal flight and/or transition process from the horizontal flight to vertical landing:
the transition process from the vertical take-off to the horizontal flight comprises:
tilting, by a powered system, the four tilting rotors forward according to a forward flight command; and
configuring tilt rates of the four tilting rotors, and thrust distribution of the four tilting rotors and the four fixed rotors according to a climb command, thereby controlling rate of climb of the vertical take-off and landing aircraft and angle of climb of the vertical take-off and landing aircraft;
the transition process from the horizontal flight to the vertical landing comprises:
tilting, by the powered system, the four tilting rotors upward to a vertical take-off and landing position according to a speed command; and
configuring the tilt rates of the four tilting rotors as well as the thrust distribution of the four tilting rotors and the four fixed rotors according to a descent command, thereby controlling rate of descent of the vertical take-off and landing aircraft and angle of descent of the vertical take-off and landing aircraft.

10. The method according to claim 9, **characterized by** further comprising an unintentional spin or stall recovery process and/or a crosswind response process:
the unintentional spin or stall recovery process comprises: starting the four fixed rotors to assist in attitude control, thereby recovering from the spin or stall condition;
the crosswind response process comprises: when the wind speed exceeds a preset threshold, assisting yaw control by differential thrust of the four tilting rotors to counteract the crosswind.
